# EUROPEAN PATENT APPLICATION

(11) **EP 2 851 556 A1**
(43) Date of publication of application: **25.03.2015**
(21) Application number: 13184995.2
(22) Date of filing: 18.09.2013
(51) Int. Cl.: F03D 1/06

(54) **Arrangement to reduce noise of a wind turbine rotor blade**

(71) Applicant: Siemens Aktiengesellschaft, 80333 München (DE)
(72) Inventor: Oerlemans, Stefan, 7400 Herning (DK)

(57) **Abstract**

The invention relates to an arrangement (10) to reduce noise of a wind turbine rotor blade (30), wherein the arrangement (10) comprises the wind turbine rotor blade (30) and a noise reduction means. Trailing edge noise is generated by a trailing edge section (34) of the wind turbine rotor blade (30) when wind flows over the trailing edge section (34). The noise reduction means comprises a noise scattering element (50), which generate scattering noise when wind flows over the noise scattering element (50). The noise scattering element (50) is arranged and prepared in a way that the generated trailing edge noise and the generated scattering noise interfere destructively, thus the noise of the wind turbine rotor blade (30) is reduced. In other words, the noise scattering element (50) generates anti-noise, which reduces or even cancels out the noise generated by the trailing edge noise. Advantageous embodiments of the noise scattering element (50) include noise scattering ridges (51) or noise scattering bumps. The invention is also directed towards a wind turbine (20) comprising such an arrangement (10). Finally, the invention is related to a method for reducing noise of a wind turbine rotor blade (30).

## Description

The present invention relates to an arrangement to reduce noise of a wind turbine rotor blade. The arrangement comprises the wind turbine rotor blade and a noise reduction means. Furthermore, the invention relates to a wind turbine for generating electricity, wherein the wind turbine comprises such an arrangement. Finally, the invention relates to a method for reducing noise which is generated by a wind turbine rotor blade.

### BACKGROUND OF THE INVENTION

Realization of a low noise emission level is a critical and highly important design parameter in the development of wind turbines in general, and wind turbine rotor blades in particular. This is due to the fact that the noise emission level of a wind turbine sets a limitation on if a wind turbine is allowed to be built and how close in the proximity of residential areas the wind turbine is allowed to be built. The noise emission level mainly sets a limitation to a rotational frequency of a rotor of the wind turbine. Furthermore, also the rotor diameter may be limited by noise constraints.

Noise emission, which is generated by rotating wind turbine rotor blades, represents a significant share of the total noise emission, generated by the wind turbine under operation. In particular, noise emission, which is generated by a trailing edge section of the wind turbine rotor blade, represents a significant share of the noise emission generated by the wind turbine rotor blade. Consequently, significant effort has been undertaken to develop solutions which mitigate and reduce noise generated by wind turbine rotor blades. For instance, serrated panels attached to or integrated with a wind turbine rotor blade may have a beneficial effect on the noise emission level, as it has been disclosed in the European patent application EP 2 309 119 A1.

However, on the one side, wind turbine fabrication shows the trend of producing ever bigger wind turbines, thus the absolute noise emission level tends to increase. On the other hand, reservations from inhabitants of residential areas in the proximity of a wind turbine against noise generated by the wind turbine at least partly increase, too.

Thus, there exists an urgent need to provide means for further reducing noise of a wind turbine rotor blade.

### SUMMARY OF THE INVENTION

This objective is achieved by the independent claims. The dependent claims describe advantageous developments and modifications of the invention.

In accordance with the invention there is provided an arrangement to reduce noise of a wind turbine rotor blade, wherein the arrangement comprises the wind turbine rotor blade and a noise reduction means. The wind turbine rotor blade comprises a root, a tip and a rotor blade longitudinal axis extending from the root to the tip. The wind turbine rotor blade furthermore comprises a leading edge section and a trailing edge section, the latter comprising a trailing edge. Trailing edge noise is generated by the trailing edge section when wind flows over the trailing edge section. The noise reduction means comprises a noise scattering element, which generates scattering noise when wind flows over the noise scattering element. The noise scattering element is arranged and prepared in a way that the generated trailing edge noise and the generated scattering noise interfere, thus the noise of the wind turbine rotor blade is reduced.

The root of the wind turbine rotor blade is referred to as the portion of the wind turbine rotor blade, where the wind turbine rotor blade is advantageously attached to a hub of a wind turbine. The attachment may be performed via flanges. Due to the fact that the flange and the attachment may also comprise a bearing, in particular a bearing for pitching the wind turbine rotor blade, the cross section of the root comprises advantageously a cylindrical shape. In the context of this application, the root has to be understood as a section or portion of the wind turbine rotor blade which refers to the section or portion where the wind turbine rotor blade is arranged and prepared for being attached to the hub. In particular, the volume of the root comprises a share of 2 per cent to 10 per cent of the total volume of the wind turbine rotor blade.

Likewise, the tip of the wind turbine rotor blade also refers to a section or portion of the wind turbine rotor blade. The tip is arranged most distal with regard to the root. The volume of the section around the tip may in particular also comprise a share of 2 per cent to 10 per cent of the total volume of the wind turbine rotor blade. The rotor blade longitudinal axis is also denoted as span of the wind turbine rotor blade.

The leading edge section comprises an edge or a rim, which is also referred to as the leading edge of the wind turbine rotor blade. If the wind turbine rotor blade is operated, i. e. if the wind turbine rotor blade is rotated about a rotor axis of rotation, wind flow is first hitting the wind turbine rotor blade at the leading edge section of the wind turbine rotor blade. Subsequently, the wind flow divides into a component which flows along an upper surface of the wind turbine rotor blade, which is also referred to as a suction side of the wind turbine rotor blade, and a second component of the wind flow, along a lower surface of the wind turbine rotor blade, which is also denoted as a pressure side of the wind turbine rotor blade. At the trailing edge both components meet again. In particular, both the volume of the leading edge section and the volume of the trailing edge section may each comprise a share of 2 per cent to 20 per cent of the total volume of the wind turbine rotor blade.

At the trailing edge section, in particular at the trailing edge, vortices or eddies may be generated e. g. due to the fact that pressure side wind flow and suction side wind flow meet again. This may generate noise. This noise is referred to as the trailing edge noise.

An aspect of the invention comprises the idea to create or generate anti-noise, which reduces or even eliminates, i. e. cancels out, the trailing edge noise. This anti-noise is generated by the noise reduction means with the noise scattering element and is thus denoted as scattering noise. In other words, the trailing edge noise and the scattering noise interfere destructively.

The generation of the trailing edge noise and of the scattering noise can also be understood as scattering of unsteady surface pressures at the trailing edge or the noise scattering element, respectively. Furthermore, the surface pressures can be understood as a footprint of the turbulent boundary layer of the wind turbine rotor blade.

In other words, the invention is based on the idea to employ an aerodynamically smooth scattering element in such a way that boundary layer noise, which is generated by the smooth scattering element, counteracts with the trailing edge noise which is generated and radiated from the same wind turbine rotor blade.

It is noted that the reduction of the overall noise of the wind turbine rotor blade is based on the physical principle of superimposing or interfering several groups of waves, in particular sound waves or acoustic waves. In other words, the noise scattering element generates first acoustic waves and, likewise, second acoustic waves are generated by the trailing edge section. The arrangement is configured such that the first acoustic waves and the second acoustic waves interfere in a way that resulting waves are deviated or scattered such that the overall noise of the wind turbine rotor blade is reduced.

The actual position where the noise scattering element is located depends, amongst other parameters, on the aerodynamic properties of the wind turbine rotor blade. It may be advantageous to place the noise scattering element at the trailing edge section of the wind turbine rotor blade.

As the scattering noise, which is generated when wind flows over the noise scattering element, and the trailing edge noise, which is generated when wind flows over the trailing edge section, are needed to interact, in particular interfere, in a stable and efficient way, it may be advantageous to place the noise scattering element close to the trailing edge. Thus, a location or placement of the noise scattering element at the trailing edge section may be advantageous.

Depending on the aerodynamic characteristics of the wind turbine rotor blade, it may, however, also be advantageous to locate the noise scattering element more upstream towards the leading edge section of the wind turbine rotor blade.

In another advantageous embodiment, the wind turbine rotor blade is divided into an inner half adjacent to the root and an outer half adjacent to the tipand the noise scattering element is located in the outer half.

Particularly, a significant share of the noise generated by the wind turbine rotor blade is generated at the outermost part of the wind turbine rotor blade. Thus, it is advantageous to locate the noise scattering element in the outer half of the wind turbine rotor blade.

In another advantageous embodiment, the wind turbine rotor blade comprises a pressure side and a suction side, and the noise scattering element is located at the suction side.

Noise generated at the suction side of the wind turbine rotor blade is particularly disturbing and comprises a significant share of the overall trailing edge noise. Thus, it is advantageous to locate the noise scattering element at the suction side. This shall however not exclude the possibility to locate a noise scattering element at the pressure side instead of the suction side. Additionally, it may also be advantageous to locate noise scattering elements at both the suction side and the pressure side.

In another advantageous embodiment, a difference between a sound pressure level of the scattering noise and a sound pressure level of the trailing edge noise is smaller than one order of magnitude.

In other words, it is advantageous if the shape and the position of the noise scattering element are chosen such that the intensity of the scattering noise has the same order of magnitude as the intensity of the trailing edge noise. In this context, one order of magnitude refers to a factor of ten.

Advantageously, the dimension of the noise scattering element, in particular a height of the noise scattering element, is chosen such that the noise scattering element is still aerodynamically smooth.

In another advantageous embodiment, the scattering noise comprises first acoustic waves and the trailing edge noise comprises second acoustic waves. A phase of the first acoustic waves is substantially opposite to a phase of the second acoustic waves.

Again, controlling the phase of the first acoustic waves may be performed or achieved by choosing the dimensions and the position of the noise scattering element accordingly.

In another advantageous embodiment, the frequency spectrum of the first acoustic waves is in line with the frequency spectrum of the second acoustic waves. This has to be understood in a way that both the noise generated by the noise scattering element and the noise generated by the trailing edge are caused by the same pattern or a similar pattern of surface pressure fluctuations, assuming frozen turbulence in the boundary layer of the wind turbine rotor blade between the noise scattering element and the trailing edge. Again, the frequency content of the scattering noise can be influenced and tuned by the dimensions and the position of the noise scattering element. In particular, the frequency spectrum may be influenced by the distance between two adjacent noise scattering sub-elements.

In yet another advantageous embodiment, the noise scattering element is designed such that the radiation directivity of the scattering noise is aligned with the radiation directivity of the trailing edge noise. This may in particular be achieved by optimizing an angle between the noise scattering element and the trailing edge. Alternatively or additionally, this may be achieved by tuning the shape of the noise scattering element.

As a typical wind turbine rotor blade comprises a length of several meters, it may thus be beneficial to arrange several patches with noise scattering elements one after another along the trailing edge. The entire noise reduction means can thus be described as segmented along the rotor blade longitudinal axis. This has the advantage of attaching patches with noise scattering elements which are relatively small and thus relatively easy to handle.

In yet another advantageous embodiment, the arrangement comprises further noise reduction means, such as an serrated extension, e. g. serrated panels, attached to the trailing edge section of the wind turbine rotor blade.

Thus, an advantage of the noise scattering element is that it can be applied on a plain wind turbine rotor blade but that it can also be combined with other, e. g. already existing, noise reduction means.

It shall be noted that the noise reduction means comprising the noise scattering element may be an integral part of manufacturing the wind turbine rotor blade. Alternatively, the noise scattering element may be attached to the wind turbine rotor blade as a retrofit. Due to the fact that the noise scattering element is located at a different position as typical existing noise reduction means, a combination, i.e. a retrofit, of existing noise reduction means and the inventive noise scattering element is easily possible, which is an advantage.

In an advantageous embodiment, the noise scattering element comprises a plurality of noise scattering ridges with a first noise scattering ridge and at least a second noise scattering ridge.

A ridge-shaped noise scattering element is particularly efficient and advantageous for generating the scattering noise which subsequently destructively interferes with the trailing edge noise.

Exemplarily, the first noise scattering ridge and the second noise scattering ridge each have a shape of a substantially straight line.

In principle, also other shapes of the noise scattering ridges are possible. For instance, the noise scattering ridges may have the shape of a wave or may have a curved or bent shape. An advantage of the shape of a straight line is however ease of manufacturing and ease of calculating and simulating the effect of the noise scattering ridges.

In another advantageous embodiment, the first noise scattering ridge and the second noise scattering ridge are substantially parallel to each other. The notion "substantially" includes deviations of up to 20 degrees. It is advantageous to arrange the noise scattering ridges substantially in parallel in order to achieve an acoustic wave pattern in an easy and efficient way, wherein the acoustic waves of the noise scattering ridges interact beneficially with the trailing edge noise.

In another advantageous embodiment, the first noise scattering ridge is substantially parallel to the trailing edge.

It has to be understood that an optimum choice of the angle between the first noise scattering ridge and the trailing edge, which is also referred to as the ridge angle, depends on the properties of the wind turbine rotor blade and the design of the noise scattering ridges. Depending on these parameters it may be beneficial to have a ridge angle which is greater than zero degree. However, advantageously, the ridge angle is zero degree, i.e. the first noise scattering ridge and the trailing edge are substantially parallel to each other. Again, the notion "substantially" includes deviations of up to 20 degrees. In particular this includes deviations of up to 10 degrees.

In another advantageous embodiment, the first noise scattering ridge and the trailing edge build a ridge angle. The ridge angle is smaller than 45 degrees, particularly smaller than 20 degrees, and even more particularly smaller than 10 degrees.

In another advantageous embodiment, a profile of the first noise scattering ridge in a lateral cross section has a mirror-symmetrical shape, in particular a shape of a portion of an ellipse.

An advantage of the mirror-symmetrical shape of the profile of the first noise scattering ridge is a relatively easy manufacturing of the first noise scattering ridge.

The portion of an ellipse may also be denoted as an elliptical arc. It shall be noted, however, that other shapes may also give a high noise reduction, depending on the characteristics of the wind turbine rotor blade and the wind flow.

A leading edge noise scattering ridge which is closest to the leading edge section of the wind turbine rotor blade can be assigned to the plurality of noise scattering ridges. The leading edge noise scattering ridge comprises a leading edge face which is facing the leading edge section. The leading edge face and a surface of the wind turbine rotor blade where the leading edge noise scattering ridge is attached to build a leading face angle. Since the noise scattering ridges are advantageously relatively small and aerodynamically smooth, any leading face angle may in principle be suited to achieve a satisfying noise reduction of the wind turbine rotor blade.It is just important that the noise scattering ridges do not adversely influence the aerodynamics of the wind turbine rotor blade.

In the following, advantageous dimensions of the noise scattering ridges will be described.

Advantageously, a transversal dimension of the first noise scattering ridge is smaller than 10 mm (millimeters), in particular smaller than 5 mm. If, for instance, the ridge angle is 0 degree, then the transversal dimension is substantially perpendicular to the trailing edge and along the wind flow. In this case, the transversal dimension is also referred to as streamwise or chordwise dimension of the noise scattering ridge.

In another advantageous embodiment, a ridge height of the first noise scattering ridge is smaller than 5 mm, in particular smaller than 1 mm.

The ridge height refers to a maximum vertical dimension of the first noise scattering ridge. The vertical dimension of the noise scattering ridge is thus perpendicular to the transversal dimension of the noise scattering ridge. It is advantageous to choose a relatively small ridge height in order to make sure that the noise scattering ridges are aerodynamically smooth. In other words, it is advantageous if the noise scattering ridge is substantially smaller than the boundary layer of the wind turbine rotor blade.

In another advantageous embodiment, a longitudinal dimension of the first noise scattering ridge is in a range between 10 cm (centimeters) and 100 m (meters), in particular in a range between 1 m and 20 m.

In another advantageous embodiment, the noise scattering ridges are made of a material comprising plastic.

In particular the material comprises a lenticular lens material. The noise scattering ridges may be prefabricated and come as a patch of this lenticular lens material.

Advantageously, the noise scattering ridges are attached to the wind turbine rotor blade by means of an adhesive, e.g. a glue.

On the one hand, the noise scattering ridges advantageously comprise a ridge height which is great enough to generate sufficient anti-noise for reducing or even cancelling out the trailing edge noise. On the other hand, the noise scattering ridges comprise a ridge height which is small enough to not adversely affect the aerodynamics of the boundary layer. An adverse influence of the noise scattering ridges may for instance be characterized by an increased drag or an early separation of the wind flow.

In another advantageous embodiment, a distance between a center of the noise scattering ridges and the trailing edge is in a range between 1 cm and 200 cm. In particular, this distance is in a range between 10 cm and 100 cm.

Another advantageous shape of the noise scattering element is a bump-shaped noise scattering element. In other words, the noise scattering element may also comprise at least one noise scattering bump.

Again, a transversal dimension, a longitudinal dimension and a height may be assigned to the noise scattering bump. Exemplarily, the longitudinal dimension may be substantially equal to the transversal dimension. In particular, the noise scattering bump may comprise a substantially hemispherical shape.

Advantageously, the noise scattering element comprises a plurality of noise scattering bumps both in spanwise and chordwise direction. Dimensions of the noise scattering bumps and the arrangement of the noise scattering bumps with regard to the trailing edge of the wind turbine rotor blade are advantageously similar to dimensions of the noise scattering ridges.

Furthermore, the invention is also directed towards a wind turbine, which comprises such an arrangement.

A wind turbine is a device that can convert wind energy, i. e. kinetic energy from wind, into mechanical energy. Advantageously, the mechanical energy is subsequently used to generate electricity. A wind turbine is also referred to as a wind power plant.

It should be noted that the inventive idea may also be transferred and applied to other applications where trailing edge noise exists, e.g. aircraft wings or ventilation fans.

Finally, the invention is directed towards a method for reducing noise, which is generated by a wind turbine rotor blade. In particular the noise is generated at a trailing edge section of the wind turbine rotor blade. The noise is reduced by means of a noise reduction means, wherein the noise reduction means comprises a noise scattering element. The method comprises the steps of generating scattering noise, and superimposing the generated scattering noise with generated trailing edge noise such that the noise of the wind turbine rotor blade is reduced.

The aspects defined above and further aspects of the present invention are apparent from the examples of embodiments to be described hereinafter and are explained with reference to the examples of embodiment.

### BRIEF DESCRIPTION OF THE DRAWINGS

Embodiments of the invention are now described, by way of example only, with reference to the accompanying drawings, of which:
- Figure 1: shows a wind turbine with wind turbine rotor blades,
- Figure 2: shows an arrangement comprising a wind turbine rotor blade and noise reduction means,
- Figure 3: shows a part of an arrangement comprising a wind turbine rotor blade and noise reduction means,
- Figure 4: shows a cross sectional view of a plurality of noise scattering ridges attached to a trailing edge section of a wind turbine rotor blade,
- Figure 5: shows a top view of a plurality of noise scattering ridges which are located between a leading edge section and a trailing edge of a wind turbine rotor blade,
- Figure 6: shows noise scattering ridges which are arranged in a ridge angle relative to the trailing edge of a wind turbine rotor blade,
- Figure 7: shows a profile of a noise scattering ridge, and
- Figure 8: shows a profile of a leading edge noise scattering ridge.

The illustration of the drawings is schematically.

### DESCRIPTION OF THE DRAWINGS

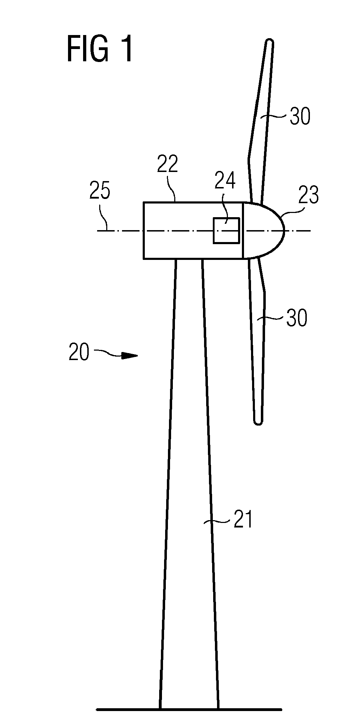

Figure 1 shows a wind turbine 20, comprising a tower 21, a nacelle 22 and a hub 23. The hub 23 is mounted rotatably about a rotor axis of rotation 25 to the nacelle 22. The wind turbine 20 furthermore comprises a generator 24, which is located within the nacelle 22 and which is arranged and prepared to convert mechanical energy, i.e. rotational energy, into electricity. The wind turbine 20 comprises furthermore two wind turbine rotor blades 30, which are attached to the hub 23. Alternatively, wind turbines 20 with more or less than two wind turbine rotor blades 30 are within the scope of this invention, too.

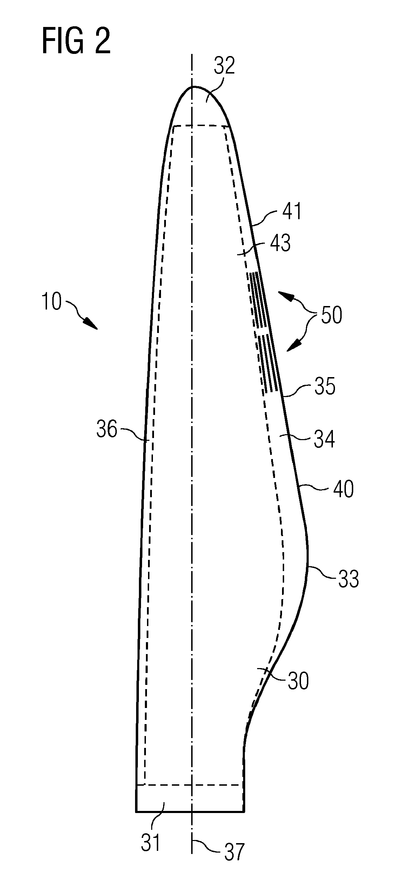

Figure 2 shows an example of the inventive arrangement, comprising a wind turbine rotor blade 30 and a noise reduction element 50. The wind turbine rotor blade 30 comprises a root 31 and a tip 32. The root 31 and the tip 32 are connected by a virtual rotor blade longitudinal axis 37, which is also denoted as a span of the wind turbine rotor blade 30. The wind turbine rotor blade 30 furthermore comprises a leading edge section 36 and a trailing edge section 34, the latter comprising a trailing edge 35. A section of the wind turbine rotor blade 30, where a chord is maximum is denoted as a shoulder 33 of the wind turbine rotor blade 30. The trailing edge section 34 can be divided into an inner half 40, which is adjacent to the root 31, and an outer half 41, which is adjacent to the tip 32. The noise reduction means 50 are located in the outer half 41.

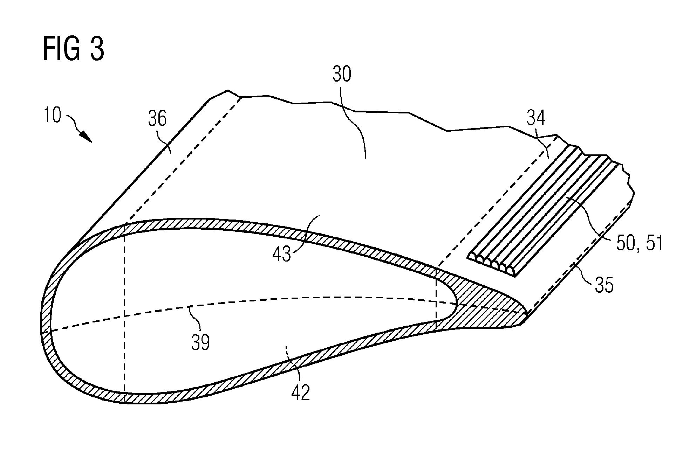

Figure 3 shows a perspective view of an arrangement 10, comprising a wind turbine rotor blade 30 and a noise reduction element 50. Like the wind turbine rotor blade which has been presented in Figure 2, also the wind turbine rotor blade 30 which is illustrated in Figure 3 comprises a trailing edge section 34 with a trailing edge 35. Additionally, it comprises a leading edge section 36. In the perspective view shown in Figure 3, a pressure side 42 and a suction side 43 of the wind turbine rotor blade 30 can be well seen. Also a chord 39, which is a virtual line between the leading edge section 36 and the trailing edge 35 can be seen.
   The noise reduction element 50 comprises a plurality of noise scattering ridges 51. The noise scattering ridges 51 are located in the trailing edge section 34 and are substantially parallel to the trailing edge 35.

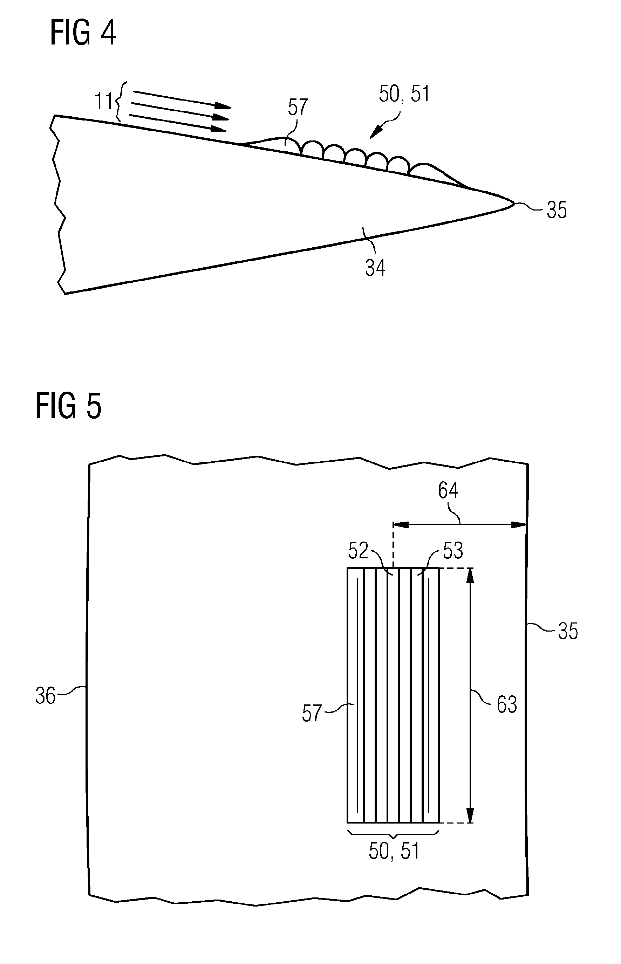

Figure 4 shows a noise reduction element 50, which comprises a plurality of noise scattering ridges 51 which are attached to a trailing edge section 34 of a wind turbine rotor blade. If the wind turbine rotor blade is being rotated, a wind 11 flows from the direction of a leading edge section (not shown) along the surface of the wind turbine rotor blade into the direction of a trailing edge 35. The wind 11 is scattered at the noise scattering ridges 51. The wind 11 is first impinging or hitting a leading edge noise scattering ridge 57. In order to ensure a smooth aerodynamic behavior or impact of the noise scattering ridges 51, the leading edge noise scattering ridge 57 comprises a smoothed and inclined leading edge face. In the example shown in Figure 4, also the noise scattering ridge which is located closest to the trailing edge 35 comprises a smoothed and inclined trailing edge face.
Figure 5 shows a position of a noise reduction element 50, comprising a plurality of noise scattering ridges 51, with regard to a leading edge section 36 and a trailing edge 35 of a wind turbine rotor blade. The noise scattering ridges 51 comprise a leading edge noise scattering ridge 57, which is closest to the leading edge section 36, a first noise scattering ridge 52 and a second noise scattering ridge 53. It can be seen in Figure 5 that a longitudinal dimension 63 can be attributed or assigned to the first noise scattering ridge 52. In the concrete example of Figure 5, the longitudinal dimension is 100 cm. The longitudinal dimension 63 is also denoted as a spanwise extent of the noise scattering ridges.
Figure 5 also shows a distance between a center of noise scattering ridges and the trailing edge, which is referred to by the reference numeral 64. In the concrete example of Figure 5, the distance 64 is 10 cm as well. Finally, it can be seen that the noise scattering ridges 51 are substantially parallel to the trailing edge 35.

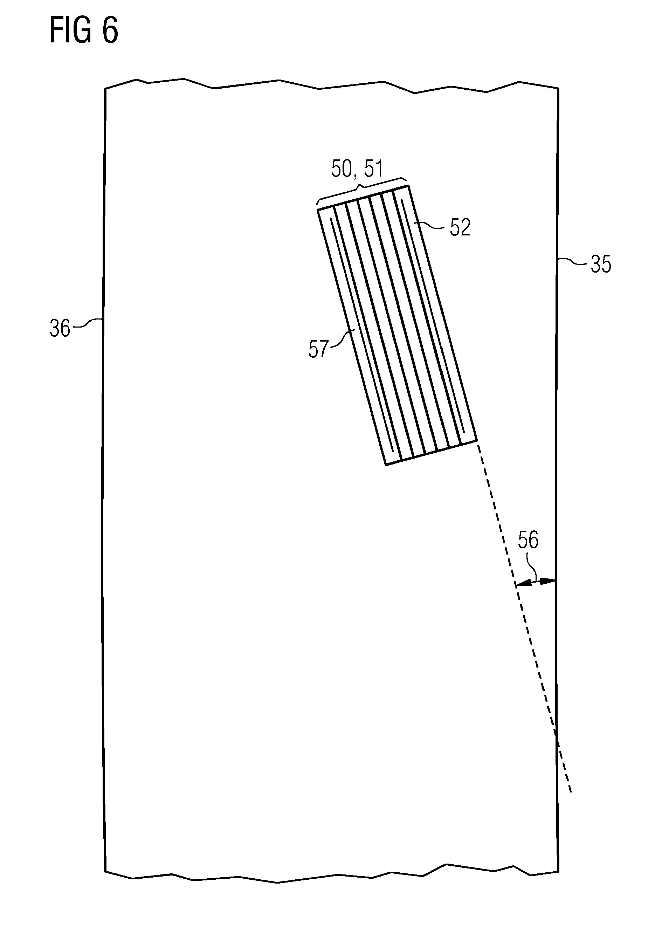

Figure 6 shows a similar arrangement compared to Figure 5, comprising a wind turbine rotor blade with a leading edge section 36 and a trailing edge 35, as well as a noise reduction element 50. The noise reduction element 50 comprises a plurality of noise scattering ridges 51. The noise scattering ridge which is closest to the leading edge section 36 is denoted as a leading edge noise scattering ridge 57. The noise scattering ridge which is closest to the trailing edge 35 is denoted as a first noise scattering ridge 52. As can be seen, the first noise scattering ridge 52 builds a ridge angle 56 with the trailing edge 35. In the concrete example of Figure 6 the choice of the ridge angle 56, which is 20 degrees, builds an optimal choice of positioning the noise scattering ridges 51 with regard to the interaction, i.e. interference, between ridge noise generated by the noise scattering ridges 51 and trailing edge noise, generated by the trailing edge 35.

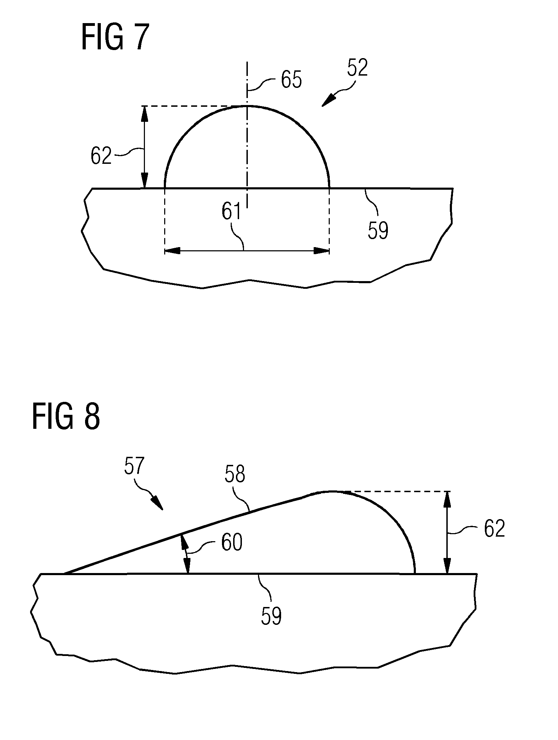

Figure 7 shows a profile of a first noise scattering ridge 52, which is attached to, or connected with, a surface 59 of a trailing edge section. The first noise scattering ridge 52 comprises a shape of an elliptical arc. Thus, a transversal dimension 61 and a ridge height 62 can be assigned. Furthermore, the shape of the first noise scattering ridge 52 is mirror-symmetrical, featuring an axis of symmetry 65. In the concrete example of Figure 7, the transversal dimension 61 is 1.6 mm and the ridge height 62 is 0.25 mm.

Finally, Figure 8 shows a profile of a leading edge noise scattering ridge 57. The leading edge noise scattering ridge 57 is attached to a surface 59 of a trailing edge section of a wind turbine rotor blade. The leading edge noise scattering ridge 57 is characterized in that a leading edge face 58, which is facing a leading edge section of the wind turbine rotor blade and the surface 59 builds a leading face angle 60. In the concrete example of Figure 8, the leading face angle 60 is 17 degrees. An advantage of such a relatively small leading face angle 60 is a smooth transition of the leading edge face 58 with regard to the surface 59 such that wind that flows from the leading edge section to the trailing edge impinges on the leading edge noise scattering ridge 57 in a aerodynamically favorable manner.

## Claims

1. Arrangement (10) to reduce noise of a wind turbine rotor blade (30), the arrangement (10) comprising the wind turbine rotor blade (30) and a noise reduction means,
wherein
- the wind turbine rotor blade (30) comprises a root (31), a tip (32) and a rotor blade longitudinal axis (37) extending from the root (31) to the tip (32),
- the wind turbine rotor blade (30) comprises a leading edge section (36) and a trailing edge section (34) with a trailing edge (35), and
- trailing edge noise is generated by the trailing edge section (34) when wind (11) flows over the trailing edge section (34),
**characterized in that**
- the noise reduction means comprises a noise scattering element (50), generating scattering noise when wind (11) flows over the noise scattering element (50), and
- the noise scattering element (50) is arranged and prepared in a way that the generated trailing edge noise and the generated scattering noise interfere, thus the noise of the wind turbine rotor blade (30) is reduced.

2. Arrangement (10) according to claim 1,
**characterized in that**
- the wind turbine rotor blade (30) ,is divided into an inner half (40) adjacent to the root (31) and an outer half (41) adjacent to the tip (32), and
- the noise scattering element (51) is located in the outer half (41).

3. Arrangement (10) according to one of the preceding claims, **characterized in that**
- the wind turbine rotor blade (30) comprises a pressure side (42) and a suction side (43), and
- the noise scattering element (50) is located at the suction side (43).

4. Arrangement (10) according to one of the preceding claims, **characterized in that** a difference between a sound pressure level of the scattering noise and a sound pressure level of the trailing edge noise is smaller than one order of magnitude.

5. Arrangement (10) according to one of the preceding claims, **characterized in that**
- the scattering noise comprises first acoustic waves and the trailing edge noise comprises second acoustic waves, and
- a phase of the first acoustic waves is substantially opposite to a phase of the second acoustic waves.

6. Arrangement (10) according to one of the preceding claims, **characterized in that** the arrangement (10) comprises further noise reduction means, in particular serrated panels attached to the trailing edge section (34).

7. Arrangement (10) according to one of the preceding claims, **characterized in that** the noise scattering element (50) comprises a plurality of noise scattering ridges (51) with a first noise scattering ridge (52) and at least a second noise scattering ridge (53).

8. Arrangement (10) according to claim 7,
**characterized in that** the first noise scattering ridge (52) and the second noise scattering ridge (53) each have a shape of a substantially straight line.

9. Arrangement (10) according to one of the claims 7 or 8, **characterized in that** the first noise scattering ridge (52) and the second noise scattering ridge (53) are substantially parallel to each other.

10. Arrangement (10) according to one of the claims 7 to 9, **characterized in that**
- the first noise scattering ridge (52) and the trailing edge (35) build a ridge angle (56), and
- the ridge angle (56) is smaller than 45 degrees, particularly smaller than 20 degrees, even more particularly smaller than 10 degrees.

11. Arrangement (10) according to one of the claims 7 to 9, **characterized in that** the first noise scattering ridge (52) is substantially parallel to the trailing edge (35).

12. Arrangement (10) according to one of the claims 7 to 11, **characterized in that** a profile of the first noise scattering ridge (52) in a lateral cross-section has a mirror-symmetrical shape, in particular a shape of a portion of an ellipse.

13. Arrangement (10) according to one of the claims 1 to 6, **characterized in that** the noise scattering element (50) comprises at least one noise scattering bump.

14. Arrangement (10) according to claim 13,
**characterized in that** the noise scattering bump comprises a substantially hemispherical shape.

15. Wind turbine (20) for generating electricity, **characterized in that** the wind turbine (20) comprises an arrangement (10) according to one of the preceding claims.

16. Method for reducing noise, which is generated by a wind turbine rotor blade (30), in particular at a trailing edge section (34) of the wind turbine rotor blade (30), by means of a noise reduction means, the noise reduction means (50) comprising a noise scattering element (50),
wherein the method comprises the steps of
- generating scattering noise, and
- superimposing the generated scattering noise with generated trailing edge noise such that the noise of the wind turbine rotor blade (30) is reduced.
